**Europäisches Patentamt**

**European Patent Office** (11) Publication number: **0 040 714**

**Office européen des brevets** **A1**

(19)

(12) # EUROPEAN PATENT APPLICATION

(21) Application number: **81103335.6** (51) Int. Cl.³: **H 02 G 3/06,** H 02 G 15/04

(22) Date of filing: **04.05.81**

---

(30) Priority: **08.05.80 US 147880**

(43) Date of publication of application: **02.12.81** Bulletin **81/48**

(84) Designated Contracting States: **BE CH DE FR GB LI**

(71) Applicant: **Spin-On Connector Company, 7413 Mesa Road, Houston Texas 77028 (US)**

(72) Inventor: **Allen, Michael D., 33303 FM 149 P.O. Box 74, Pinehurst Texas 75362 (US)**
Inventor: **Pastusek, Mike J., 1811 Nocturne, Houston Texas 77055 (US)**

(74) Representative: **Glawe, Richard, Dr. Patentanwälte Dr. Richard Glawe et al, Dr. Walter Moll, Dipl.-Ing. Klaus Delfs Dr. Ulrich Mengdehl Dr. Heinrich Niebuhr Postfach 260 162, D-8000 München 26 (DE)**

---

(54) **Cable connector having a tapered sleeve insert for large diameter, metallic sheathed cable.**

(57) A cable connector (10) of universal design for attaching to the end of a scroll-type metallic cable sheath, the universal part thereof being a replaceable tapered sleeve insert (16). Sleeve inserts (16) of a non-complex design are provided over a wide range of sizes and scroll configurations, each of such inserts (16) accommodating to a range of pitch scroll configurations and accommodating to a common connector or terminator body (10). A compression gland (28) fits with the entrance sleeve face and with the entrance connector body face so that when the gland nut (32) is tightened the sleeve insert (16) is seated and the cable is held by the compression gland. The use of the sleeve insert (16) also eliminates the need for a union part of the connector that would otherwise be used for some installations. The range of pitch scroll configuration accommodation is provided by flat shallow turns in the screw inserts (16).

COMPLETE DOCUMENT

turns in the screw inserts.


## BACKGROUND OF THE INVENTION


### Field of the Invention

This invention pertains to large diameter cable connectors or terminators and specifically to such connectors suitable for joining cables having an aluminum or other metallic sheath with a helical or scroll-like external appearance, the pitch of which is relatively large, to a mounting wall, plate or other connector.


### Description of the Prior Art

Large cables typically comprise a plurality of internal conductors or wires, some of which may be individually insulated and some of which may not be, but which are shielded from other wires by internal filler material within the outer sheath or jacket of the cable. Such large diameter cables are used, for example, for conducting power and/or control signals to distribution centers, motors, panel boards and numerous sundry electrical and electro-mechanical apparatus.

Although there are various types of metallic sheathed or jacketed cables, three popular types of metallic sheathed cables are the Corflex cable of Canada Wire & Cable Co., the CLX cable of the Okonite Cable Co., and the interlocked armored cable. All three

0040714

types have a metallic covering with an external helical or screw-like or scroll appearance of large pitch. The Coriflex cable includes a seamless aluminun tube covered with a PVC jacket. ✻ The interlocked armored cable includes a metal sheath which has separate parts that interlock with each other to form consecutive flexible junctions.

Cables of the above-described types vary in size typically from about 1/2 inch to about 5-1/2 inches. The larger of such cables have a greater pitch than the smaller ones, so that over the range of common sizes there are a great number of individual sizes and pitch dimension configurations.

Installation environments for such cables also vary tremendously. That is, cables often terminate at a junction with respect to another cable or into a piece of apparatus in moist conditions, sometimes even in standing water, in sandy or extremely dusty conditions, in conditions where there may be surrounding potentially explosive gases and numerous other surrounding environmental influences. Such other influences include vibrations and cable strains introduced by pushes and pulls. A cable connector that does not properly support and protect a cable will cause premature cable failure to occur, which can result in signal shortening, power arcing and the like.

In addition, cable connectors that do not properly terminate the cable in certain potentially hazardous

✻ The CLX cable includes a rolled and welded aluminum sheath.

conditions permit an additional potential hazard to exist. For example, leakage of an adverse environmental atmosphere through the wall of an apparatus can introduce adverse conditions to the sensitive workings of engines, switches, controls and the like. Moreover, apparatus which is potentially hazardous itself, such as in the case of motors capable of exploding when they fail, should be completely shielded at the wall of the apparatus so as to prevent personnel injuries and injury to other apparatus in the event of such an explosion.

Therefore, it may be seen that for various reasons, cable connectors of large diameter, metallic sheathed or jacketed cables are made to insure a tight fit around the cable, a grounded connection with regard the sheath or jacket to insure against arcing, and a tight fit with respect to the apparatus wall or body part through which the cable enters via the connector.

Furthermore, suitable cable connectors are also made so that they properly support the cables with which they are used to prevent wear that would otherwise be caused by cable droop, vibration or longitudinal strains.

Connectors in the past have included typically six to ten parts, including various gland nuts, bushings, pressure rings, sleeves, lock nuts, gaskets and the like. As can be readily appreciated, these various structures must be precision fittings wherein the parts that fit together coordinate precisely to perform their intended functions. The loss of any part, which parts are usually non-standard by nature, means that the entire connector is no longer useful. Furthermore, a connector made of many parts that fit together in a specific order is not only time-consuming and sometimes difficult to assemble, but is often susceptible to being put together in the wrong order, in which event the entire connector becomes ineffective. That is, seals are not successfully assured, grounding connections are not effectively made, and the like.

One of the drawbacks to most of the cable connectors in the prior art is that they slip over the cable and then are tightened into position via gland nuts squeezing a flexible bushing or washer against the cable. Others use a side-advancing screw to insure against cable slippage. The main body part of such connectors, however, is not secured to the cable, thereby not assuring a certain seal. However, a terminator connector has been developed by Canada Wire & Cable Co. and introduced in the Canadian marketplace to overcome the disadvantage of slippage inherent in such connectors by producing a connector that is internally threaded with a large diameter pitch that turns over the last two or three of the external "threads" or cover turns in the sheath of the Corflex cable. This has resulted in a simplified connector design, or terminator, but does not provide special terminations often required of connectors.

Other connectors have been designed by Houston Wire and Cable Co. for meeting many of the special environmental conditions that exist, which connectors include a body portion that turns over or screws onto the end of the metallic cable. However, such connectors are not universally adaptable to a wide range of sizes and configurations. Further, some types of these connectors do not require a union connection and others do, thereby requiring yet additional connectors for different installations, again in a full range of sizes and configurations.

One connector design which overcomes many of the disadvantages set forth above is described in patent application Serial No. 134,483, filed March 27, 1980, commonly assigned, which is incorporated herein by reference for all purposes. Such connector employs a straight sleeve insert which has a screw configuration that is slightly more helical than the accommodating sheath scroll. Such inserts do not positively seat, but tend to rotate as the gland nut that squeezes the gland into the end is turned. Furthermore, the gland effectively seals the terminator body to the cable, but does not positively contain the sleeve.

Furthermore, in assembly, the sleeve is carefully put on first so as to ensure that the threads are not cross-threaded. The straight sleeve is then inserted in the bore of the terminator body, which is at a close tolerance. In the field, the straight sleeve is often difficult to insert into the terminator body with ease.

Moreover, the helical thread configuration for accommodating the scroll of the sheath does not accommodate a range of pitch sizes. Therefore, even though the use of sleeve inserts makes the connector more universal with respect to a range of sizes than a single terminator body was capable of accommodating, it is still necessary to have a large number of sleeves, one for each expected scroll pitch dimension.

Therefore, it is a feature of the present invention to provide an improved cable connector suitable for being screwed onto the end of a helically shaped metal sheath of a large diameter cable and having a positively seated replaceable part for accommodating to a wide range of sheath diameter sizes.

It is another feature of the present invention to provide an improved cable connector suitable for being screwed onto the end of a helically shaped metal sheath of a large diameter cable and having a positively seated replaceable part for accommodating to a wide range of sheath-screw configurations.

It is still another feature of the present invention to provide an improved cable connector suitable for being screwed onto the end of a helically shaped metal sheath of a large diameter cable, the connector being equipped with a selectable tapered sleeve, thereby making the overall connector suitable for

- 8 -  0040714

fitting to cables over a wide range of sizes and configurations.

It is yet another feature of the present invention
to provide an improved cable connector suitable for
being screwed onto the end of a helically shaped metal
sheath of a large diameter cable, the connector being
equally suitable and inexpensive for either an installation where a union part would have been used or
where a union part would not have been used.

It is still another feature of the present invention to provide an improved cable connector having a
sleeve insert suitable for being screwed onto helically
shaped metal sheath cables over a range of pitch dimensions.

It is yet another feature of the present invention
to provide an improved cable connector for a large diameter cable having a part that can be made of non-corrosive material even when the environmental application of
the connector is highly corrosive in nature.


## SUMMARY OF THE INVENTION

The invention embodiments disclosed herein are
cable connectors or terminators suitable for terminating
a large-diameter cable including a metallic sheath or
jacket having a large-diameter cable including a metallic
sheath or jacket having a large-diameter pitch, external
thread-like appearance. Such connectors are used, for example, to join a cable having a plurality of insulated wires, noninsulated wires, or a combination of such wires at a wall or other barrier with a power control or transfer box, a motor housing, a building or room in a building or the like, the end of the sheath terminating within the connector and the individual wires egressing therefrom to their individual connections.

The terminator body includes a receiving end having an internally tapering bore to receive a sleeve of similar external surface therein and an egressing end having a smaller bore for permitting the individual wires to pass therefrom. The sleeve is internally bored and threaded to turn over one or more of the helical threads of the cable sheath. The external dimension fits with close, interfering tolerance into the receiving end of the terminator body. The entrance faces of the sleeve and the receiving end of the terminator body are chamfered at the same angle to form a contiguous surface.

A compression gland fits snugly into the chamfered faces and around the cable sheath. A gland nut screws over the receiving end of the terminator body cupping over the gland so as to press it longitudinally against the predescribed faces, seating the sleeve within the accommodating end of the terminator body and radially inward against the cable sheath to secure the sleeve against rotation and to hold the gland compressed against the sheath.

The sleeve is secured onto the sheath in such a manner to resist loosening because of vibration or the like by special configuration of the internal threads therein. The threads are flat and less shallow than are the turns on the cable sheath, except for the last turn, so as to permit slight squeezing of the sheath when the sleeve is screwed thereover. The flat thread configuration of the sleeve also permits such sleeve to accommodate a range of pitches of sheath turns. Further, there is a separating flat portion between the threads in the sleeve to bite into the corresponding slightly rounded grooves in the sheath. This separating flat portion also can be tapered for ease of connecting onto a fuller range of scroll sizes.

Alternate sleeves of the same external dimension as the sleeve for fitting onto a first cable, but having an internal bore of different dimension and thread size or configuration, permits the terminator body and gland nut to be used with one or more sleeves. If there is a wide variation in accommodating cable sizes between one sleeve and another, differently sized compression glands would be used to be compatible therewith.

Finally, the sleeve, if sealed from the environment at both ends of the terminator body, can be made of less corrosive resistant material than the terminator body and gland nut, even when a corrosive environ-

0040714

ment is anticipated in a particular use application.

## BRIEF DESCRIPTION OF THE DRAWINGS

So that the manner in which the above-recited features, advantages and objects of the invention, as well as others which will become apparent, are attained and can be understood in detail, more particular description of the invention briefly summarized above may be had by reference to the embodiments thereof which are illustrated in the appended drawings, which drawings form a part of this specification. It is to be noted, however, that the appended drawings illustrate only preferred embodiments of the invention and are therefore not to be considered limiting of its scope, for the invention may admit to other equally effective embodiments.

In the Drawings:

Fig. 1 is a cross-sectional view of a first embodiment of the present invention, the embodiment including a tapered sleeve of representative configuration for accommodating a cable having an externally threaded sheath configuration.

Fig. 2 is a partial cross-section view of an alternate sleeve embodiment for accommodating a cable of second configuration in the terminator body shown in Fig. 1.

Fig. 3 is an enlarged partial cross-sectional view of the thread structure of the sleeve with respect to the thread structure of a metallic sheath accommodated therein in accordance with the present invention.

## DESCRIPTION OF PREFERRED EMBODIMENTS

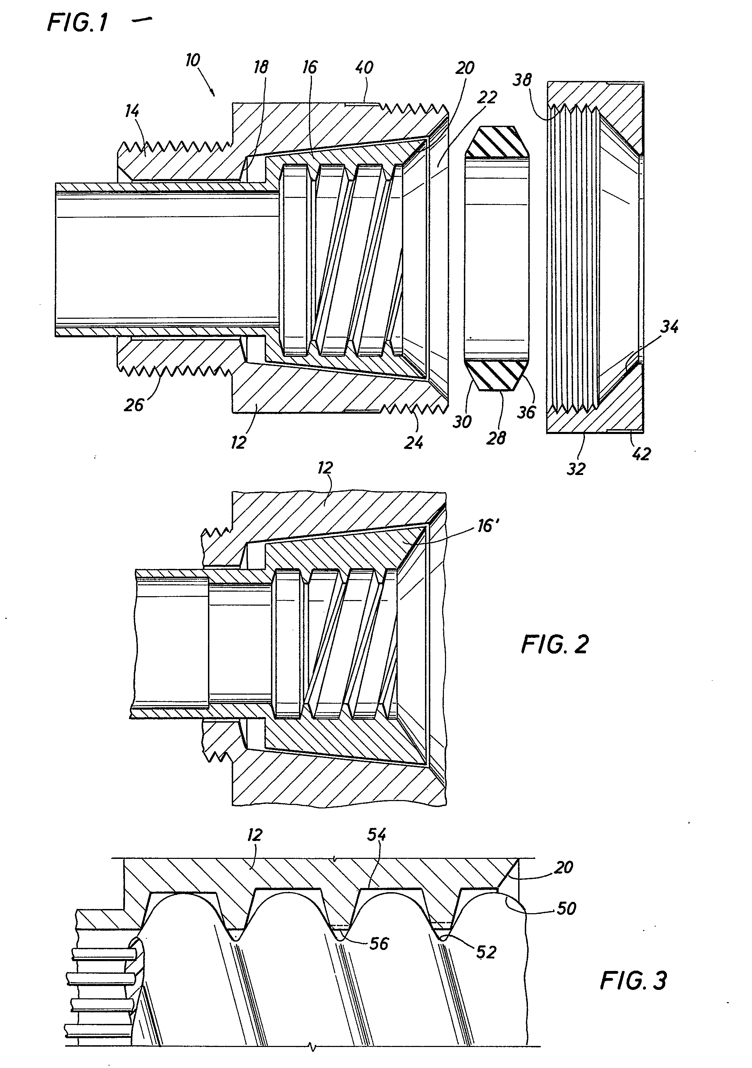

Now referring to the drawings, and first to Fig. 1, a preferred embodiment of the present invention is shown for termination a Corflex, CLX, armored or similar metallic sheathed cable (not shown). Typically, such a cable encloses a plurality of bare or independently insulated conductor wires, noninsulated wires or a combination thereof which extend from the connector while the sheath terminates therein. The wires may be further packaged with core binder and fillers. The exact configuration of the packet of wires is not germane as a limitation of the present invention. The sheath of the cable is sometimes additionally covered by a PVC or other outer covering material. In any event, the sheath has an outer or external helical screw-thread appearance and it is with respect to such appearance that the connectors are designed to operate according with the description hereinbelow.

The external diameter of typical sheath sizes of the configuration with which the connector is designed to operate run from just under 1/2 inch to 5-1/2 inches. For a 1/2 inch O.D. sheath, the pitch of the helical screw-like sheath is about 1/4 inch. For the 5-1/2 O.D. sheath, the pitch of the helical screw-like sheath is about 3/4 inch. For purposes herein, such cables are referred to as large-diameter cables and such screw-thread dimension are referred to as being of large pitch.

The cable connector or terminator shown in Fig. 1 includes a terminator body 10 having an enlarged receiving end 12 and a smaller egressing end 14. The receiving end is centrally bored for internally receiving a sleeve 16, described more fully below. The sleeve is internally bored and threaded for matingly accommodating the external thread-like end of an accommodated cable sheath.

The external surface of sleeve 16 is conically tapered with respect to its central axis from its ingressing end to its egressing end. Receiving end 12 of terminator body 10 is centrally bored so as to accommodate therein the conically tapered sleeve with very close, interfering tolerance. Preferably, the taper of the bore is slightly greater than the external taper of the sleeve so that the sleeve, when it is seated, is actually press fitted into the bore of receiving end 10. It should be noted that the bore of the terminator body extends past the sleeve, the taper of the sleeve contacting the taper of the body bore to positively seat the sleeve into the body.

The egressing end of the terminator body has a smaller internal diameter than the egressing end of its tapered receiving end so that an internal bore 18, preferably at an angle of about 30 degrees, is presented to permit the wires extending from the end of the cable to easily slide through the bore of the egressing end without difficulty.

Sleeve 16 is chamfered at entrance face 20 so as to present a frusto-conical surface to readily position an inserted cable end. The longitudinal length of receiving end 12 of the terminator is slightly greater than the longitudinal dimension of sleeve 16 and presents a frusto-conical face surface 22 which is contiguous with face 20 of sleeve 16.

Receiving end 12 is externally threaded with threads 24 so as to permit a gland nut, described hereinafter, to be screwed thereover from the entrance face direction.

Egress end 14 is externally threaded with threads 26 to permit securing into a wall or barrier or to be placed through an opening and permit an installation nut to secure the terminator in place.

Compression gland 28, typically made of neoprene rubber, includes a face 30 which positions with and aligns partially opposite each face 20 and face 22 of sleeve 16 and receiving end 12 of the terminator body, respectively. The gland is preferably symmetrical to include a face 36 which is complementary to face 30 and on the opposite side thereof. The internal bore

- 15

opening of gland 28 is just large enough to fit over the external diameter of the cable inserted into sleeve 16.

Gland nut 32 includes a central bore with an internal frusto-connical facing surface 34 for accommodating with mating facing surface 36 of gland 28. The internal dimension of the main part of the bore fits over the gland in cup-like fashion and includes internal threaded portion 38 thereof adapted to be screwed into threads 24 of the terminator body.

Terminator body 10 is knurled or otherwise treated at surface 40 adjacent threads 24 so as to permit gripping with a wrench or other suitable device. Likewise, the external surface of gland nut 32 is knurled or otherwise treated along at least a part of its external surface at surface 42 to permit easy gripping with a wrench or other suitable device for tightening purposes.

The preferred fit of gland 28 with respect to sleeve face 20 and body face 22 is such that the initial contact of the gland is harder with respect to face 20 than with respect to face 22. This provides positive seating of sleeve 16 within receiving end 12, then spreading of the gland to moisture seal the annulus opening between the sleeve and the internal bore of the receiving end. As the gland further expands, it does so inwardly to squeeze against the cable. It should be noted that when the gland nut is removed after once having been tightened, a slight longitudinal jarring is required to unseat the sleeve from the receiving end of the terminator body.

The threaded portion of the sleeve is shown in a preferred embodiment in Fig. 3. For purposes of discussion the external threads of the cable sheath can be described as being rounded to present a rounded peak 50 and a rounded valley 52 between individual threads. The internal threaded surfaces of sleeve 12 are flat and slightly less shallow than the rounded surfaces of the threads of the cable sheath as shown at thread 54, except for the last thread. Moreover, the individual threads of the sheath are separated or spaced apart at flats 56 so as to present fairly sharp abutting surfaces within valley curves 52 when the sleeve is screwed over the turns or threads of the cable sheath. Although there does not have to be any slope to consecutive flats 56, the slope of flats 56 can be slightly tapered (as shown by the dotted lines) to permit ease of connection over a greater range of cable scroll configurations, while assuring that at least the final turn is tightly secured both at flat 54 and flat 56.

In operation, sleeve 12 is joined to the end of the cable sheath by screwing or turning over them in thread-like fashion. Typically, the sleeve will turn over about three and one-half of the threads, although a lesser number of threads is satisfactory to complete the connection. In any event, as the sleeve is turned over the cable sheath, the rounded portions of the cable sheath do not quite come into contact with flats 54. Since the sleeve accommodates to a range of scrolls, the peak of the scroll may not be centered respectively with regard flats 54. At the same time, the abutting surfaces of flats 56 score into the surface of the cable sheath to make a secure connection. The sheath normally is turned so that it longitudinally terminates with the last thread of the sleeve immediately before the individual wires from the cable egress therefrom. This last turn has a flat of slightly shallower dimension to effectively bind on the cable scroll. To ensure that the sleeve does not screw on too far, the bore of the sleeve at its exit is preferably made to be reduced even further compared to the bore dimension at the last of the flats between the threads.

The area which exists on either side of the center point within the threaded portion of the sleeve permits a range of accommodated sheath pitch dimensions to be received. That is, since only a few end turns are screwed into the sleeve such a sleeve thread configuration will accommodate a range of sleeve thread pitch dimensions.

The gland is then squeezed by tightening of the gland nut so that it presses both longitudinally against the faces of the terminator body and of the sleeve, and radially inward against the cable sheath, as hereinabove described. The wires extending from the

0040714

cable egress through the egressing end of the connection so that their individual connections can be completed.

Note that it is possible to internally fill the connector with putty or other explosion retarding substance, if desired, from the egressing end to seal off the area around and between the individual egressing wires at that point.

Now referring to Fig. 2, please note that the external dimension of sleeve 16' is identical with that of sleeve 16 shown in Fig. 1. However, the internal bore dimension is somewhat smaller than the internal dimension of the sleeve shown in Fig. 1 so as to accommodate a cable sheath of smaller size. Such a smaller size may include a threaded portion of different configuration than that shown for the sleeve in Fig. 1, as well. Therefore, the screw pitch of the internal sleeve screws can be made to be less than the pitch for the large internal sleeve size. It will be seen that the remainder portion of the terminator is the same as that described for the combination illustrated in Fig. 1. However, it may be that the difference in accommodated cable sheath sizes is such as to require a different compression gland, that is, one which has a smaller bore opening than gland 28, so as to accomplish the desired connection with regard the sheath. Small variations in size would not matter; however, a deviation of some difference would require an alternate gland.

It may be seen that additional sleeves having different bore dimension and thread configurations may be used so as to accommodate yet additional cable sheaths so long as the external dimension of the sleeve can still be accommodated in the manner shown for the sleeves illustrated in Fig. 1 and Fig. 2 in the same terminator body. Additional glands may likewise be required for the various alternate sleeves.

It is apparent that in manufacturing, sleeves and the terminator bodies are made so that one size of terminator body universally accepts a wide number of sizes of different sleeves, thereby reducing the manufacturing and stocking costs involved in manufacturing the connectors in the manner described compared with equivalent costs for conventional connectors not having such sleeves. The full range of sizes for accommodating the full range of cable sheaths in common usage may be provided by relatively few sizes of terminator bodies with sleeves of different sizes and configurations being much larger in number to accommodate to the full ranges. However, even a single sleeve with the flat threads hereinabove described will accommodate a range of pitch dimensions for the few turns that are normally invoved in making a connection. Moreover, it may be seen that a sleeve, before it is tightened, permits an installation where a union part has previously been needed.

Furthermore, when the egressing end is sealed either with putty or other explosion retarding substance or by sealing off the egressing end of the terminator body at a housing connection with respect to threads 26, the sealing of sleeve 16 by gland 28 completely isolates sleeve 16 from the environment. Hence, sleeve 16 can be made of a material which is less resistant to corrosion than terminator body 10. For example, in a corrosive environment, body 10 may have to be made of brass, stainless steel or equivalent material, whereas sleeve 16 can be made of aluminum. Hence, when mass production is considered for connectors for both corrosive and non-corrosive environments, terminator bodies and gland nuts are made of both highly corrosive material and material which is less corrosive resistant, whereas sleeves only have to be made of only one material, namely, the cheaper, less corrosive resistant material. A savings is, therefore, effected.

While particular embodiments of the invention have been shown and described, it will be understood that the invention is not limited thereto, since many modifications may be made and will become apparent to those skilled in the art.

0040714

WHAT IS CLAIMED IS:

1. A cable connector suitable for affixing to the terminating end of a cable comprising a plurality of wires and having a metallic sheath externally threaded with a large pitch, said connector comprising

a sleeve having a central bore with internal threads for being matingly threaded over the externally threaded end of the cable sheath, the entrance end of said sleeve being frusto-conically chamfered to receive the cable end, the wires egressing from the cable sheath also egressing from the sleeve, said sleeve having a tapered external surface which reduces in size toward the egressing end of the sleeve.

A terminator body having

a receiving end with a tapered central bore for internally receiving said sleeve with a close, interfering tolerance.

an egressing end with a central bore of smaller dimension than the external diameter of the egressing end of said sleeve through which the wires from the cable egress,

said entrance end of the receiving end of said body being frusto-conically chamfered contiguously with the entrance end chamfer of said sleeve, said entrance end of said terminator body being externally threaded,

a compression gland having a central opening slightly larger than the sheath and having a surface for pressing against said chamfered entrance ends of said sleeve and of said terminator body, and

a gland nut adapted to screw onto the external threads of said entrance end of said terminator body and at least partially longitudinally internally accommodating said gland so that tightening of said gland nut securely presses said gland against the sheath.

2.    A cable connector in accordance with claim 1, wherein said tapered external surface of said sleeve is conical.

3.    A cable connector in accordance with claim 1, wherein the taper angle of said tapered central bore of said body is slightly larger than the external surface of the sleeve to form a press fit as the sleeve seats into its use position.

4.    A cable connector in accordance with claim 1, wherein said terminator body includes a tapered bore between the tapered bore of said receiving end and the central bore of said egressing end.

5.  A cable connector in accordance with claim 1, wherein said gland presses said sleeve with respect to said terminator body to secure said sleeve against relative movement therewith.

6.  A cable connector in accordance with claim 5, wherein said gland also presses against said terminator body following the seating of said sleeve to seal the annulus between said sleeve and said terminator body.

7.  A cable connector in accordance with claim 1 wherein said egressing end of said terminator body is externally threaded.

8.  A cable connector in accordance with Claim 1, wherein the internal threads of said sleeve are squared to be broader in cross section than the external threads of said cable sheath, whereby said sleeve is adapted to receive the end of externally threaded metallic sheaths over a range of pitches.

9.  A cable connector in accordance with Claim 5, wherein the internal threads of said sleeve are slightly less shallow than the external threads of said cable sheath.

10. A cable connector in accordance with Claim 5, wherein contiguous internal threads of said sleeve are dimensionally spaced slightly apart, thereby presenting sharply abutting thread corners into the threads of the sheath.

11. A cable connector in accordance with Claim 10, wherein said sharply abutting corners form a slight taper.

12. A cable connector in accordance with Claim 1, wherein said sleeve is of less corrosive resistant material than said terminator body and said gland nut.

13. A cable connector in accordance with Claim 1, wherein said connector is suitable for affixing to the terminating end of a second cable of a diameter size different from the first-named cable, the second cable comprising a plurality of wires and having a metallic sheath externally threaded with a large pitch, said cable connector including

    a second sleeve having a central bore with internal threads for being matingly threaded over the externally threaded end of the sheath of the second cable, the entrance of said second sleeve being frusto-conically chamfered to receive the cable end, the wires egressing from the cable sheath also egressing from said second sleeve, said second sleeve having the same external surface taper as said first-named sleeve,

said terminator body receiving end internally receiving said second sleeve with a close, interfering tolerance,

said egressing end central bore being of smaller dimension than the external diameter of the egressing end of said second sleeve,

said chamfer of said second sleeve and of said terminator body being contiguous, and

a second compression gland having a central opening slightly larger than the sheath of said second cable and having a surface for pressing against said chamfered entrance ends of said second sleeve and of said terminator body,

said gland nut at least partially longitudinally accommodating said second gland so that tightening of said gland nut securely presses said second gland against the sheath of said second cable.

14.  A cable connector in accordance with Claim 1, wherein said connector is suitable for affixing to the terminating end of a second cable of a configuration different from the first-named cable, the second cable comprising a plurality of wires and having a metallic sheath externally threaded with a large pitch, said
cable connector including

a second sleeve having a central bore with internal threads for being matingly threaded over
the externally threaded end of the sheath of
the second cable, the entrance end of said
second sleeve being frusto-conically chamfered to receive the cable end, the wires
egressing from the cable sheath also egressing from said second sleeve.


15. A universal connector suitable for affixing to the
terminating end of a cable of first outer diameter size
comprising a plurality of wires and having a metallic
sheath externally threaded with a large diameter pitch
or for affixing to the terminating end of a cable of a
second outer diameter size comprising a plurality of
wires and having a metallic sheath externally threaded
with a large diameter pitch, said connector comprising

a first sleeve having a central bore with internal
threads for being matingly threaded over
the externally threaded end of the sheath of
a cable of first outer diameter size, the entrance end of said first outer diameter size,
the entrance end of said first sleeve being
frusto-conically chamfered to receive the
cable end, the wires egressing from the cable sheath also egressing from said first sleeve,

said first sleeve having a tapered external surface which reduces in size toward the egressing end of said first sleeve,

a second sleeve having a central bore with internal threads for being matingly threaded over the externally threaded end of the sheath of a cable of a second outer diameter size, the entrance end of said second sleeve being frusto-conically chamfered to receive the cable end, the wires egressing from the cable sheath also egressing from said second sleeve,

said second sleeve having the same external surface taper as said first sleeve,

a terminator body having

a receiving end with a tapered central bore for internally receiving said first or said second sleeve with a close interfering tolerance,

an egressing end with a central bore of smaller dimension than the external diameter of the egressing ends of said first sleeve or said second sleeve through which the wires from the cable received by said respective first sleeve or second sleeve egress,

said entrance end of the receiving end of said body being frusto-conically chamfered contiguously with the entrance end chamfer of said first sleeve or said second sleeve, said entrance end of said terminator body being externally threaded,

gland nut means including

a gland having a central opening slightly larger than the sheath of said first outer diameter cable or than the sheath of said second diameter cable and having a surface for pressing against said chamfered entrance ends of said first sleeve or said second sleeve and of said terminator body, and

a gland nut adapted to screw onto the external threads of said entrance end of said terminator body and at least partially longitudinally internally accommodating said gland so that tightening of said gland nut securely presses said gland against the sheath of the cable of first outer diameter size or the sheath of the cable of second outer diameter size.

**FIG.1**

**FIG. 2**

**FIG.3**

## DOCUMENTS CONSIDERED TO BE RELEVANT

| Category | Citation of document with indication, where appropriate, of relevant passages | Relevant to claim |
|---|---|---|
| | <u>US - A - 3 448 430</u> (THOMAS & BETTS)<br><br>* Column 2, line 38 to column 3, line 42; figures 1,2 *<br><br>-- | 1,7, 13 |
| | <u>GB - A - 989 480</u> (RICE-SMYTHE)<br><br>* Page 2, line 43 to page 3, line 69; figures 1-3 *<br><br>-- | 1,13 |
| | <u>US - A - 1 886 413</u> (ERIE MALLEABLE IRON)<br><br>* Page 1, lines 19-73; figures 1-5 *<br><br>-- | 1,13 |
| A | PROSPECTUS, bul. 2748, March 1963, Crouse-Hinds Company, New York, USA "Cable terminators", pages 1-12<br><br>* Pages 1-5 and 8-10 *<br><br>---- | 1,7, 13 |

**CLASSIFICATION OF THE APPLICATION (Int. Cl.³)**

H 02 G 3/06
H 02 G 15/04

**TECHNICAL FIELDS SEARCHED (Int. Cl.³)**

H 02 G 3/06
H 01 R 9/05
H 01 R 17/12
H 02 G 15/04
F 16 L 25/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-08-1981 | LOMMEL |

EPO Form 1503.1 06.78